(19) Europäisches Patentamt

European Patent Office

Office européen des brevets

(11) **EP 1 079 605 A2**

(12) **EUROPEAN PATENT APPLICATION**

(43) Date of publication:
28.02.2001 Bulletin 2001/09

(51) Int. Cl.[7]: **H04N 1/60**

(21) Application number: 00118381.3

(22) Date of filing: 24.08.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 24.08.1999 JP 23673099

(71) Applicant:
**Matsushita Electric Industrial Co., Ltd.
Kadoma-shi, Osaka 571-8501 (JP)**

(72) Inventor: **Kanamori, Katsuhiro
Kawasaki-shi, Kanagawa 211-0025 (JP)**

(74) Representative:
**Grünecker, Kinkeldey,
Stockmair & Schwanhäusser
Anwaltssozietät
Maximilianstrasse 58
80538 München (DE)**

(54) **Color reproduction terminal apparatus, network color reproduction system, and color reproduction method**

(57)    A color reproduction system accurately corrects color displayed on a user's own display by generating a profile at a server, in order to allow each user to obtain a service for performing accurate color reproduction through a network. This system includes a network connecting section (107) for connecting a color reproduction terminal apparatus to a network; a color image display (105) for displaying a color image; a color camera (101) or a sensor (102) for capturing a color reproduction characteristic of the color image display and a viewing illuminant condition; and a color converting section that provides color conversion for the color image obtained through the network and outputs it to the color image display. The color conversion may be provided for a color image obtained though the network using a color conversion profile and a color conversion program which are downloaded through the network.

**Fig. 1**

EP 1 079 605 A2

**Description**

BACKGROUND OF THE INVENTION

FIELD OF THE INVENTION

The present invention relates to color management and correction technology employing a color display terminal and a network color reproduction system using the terminal.

DECRIPTION OF THE RELATED ART

Recently, in the field of a color management technology, a software system for color management has been installed in an operating system (OS) level for providing color matching between color devices such as scanners, displays, and printers. In this color management system (hereinafter referred to as CMS), device color conversion characteristic information called a color conversion profile is prepared in advance for each color device, and is installed as a color converting part in an OS of a personal computer (PC). The color converting part converts a color value to a device value by performing the color conversion of a color image based on the color conversion profile. Measurement of such display characteristic and modeling of the device are hereinafter called "characterizations". The color conversion profile of a color device is produced based on a measurement result of the color device and a calculation algorithm by a color device manufacturer. The color conversion profile is provided to a user together with the color device when the user purchases the color device.

At the present time, the color management can be practically and effectively operated only in a very narrow field for of the following reasons.

Firstly, a color device and an apparatus using it generally have their individual difference and aging variation. When the color device is intended to be characterized, accuracy of color reproduction is still low even using a typical color conversion profile provided by the manufacturer. In addition, color reproduction characteristic of a color display is greatly affected by characteristics of not only the display itself but also a display card built in a PC. The user is therefore required to perform the characterization of his/her color device by himself/herself.

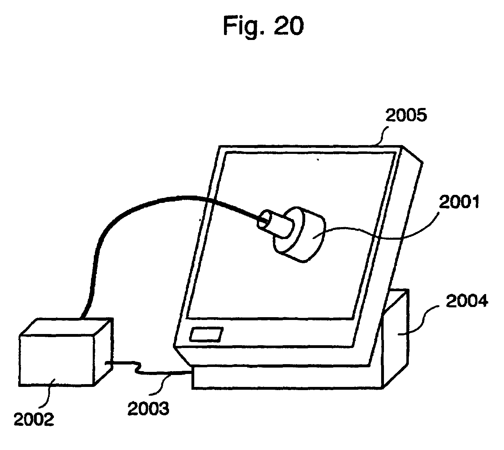

Fig. 20 shows a characterization method or a calibration method of a display in accordance with the prior art. Colorimeter 2001 is adsorbed to display 2005, reads a color signal, and feeds color signal data into PC 2004 via measuring equipment interface 2002 and cable 2003. The PC generates a display profile or finely adjusts the profile in relation to secular changes by software. For this adjustment, however, an originally unnecessary measuring equipment is required, and the display must be measured before every usage thereof. This is troublesome for common users, and is not practical.

Secondly, not all PCs support color management. Recently-developed PCs may perform the color management at an OS level, but many PCs, among an unspecified number of those linked to a network, have an OS that does not support the color management itself These PCs cannot perform the color management itself.

Thirdly, there is a problem of cross media color reproduction, which has recently become especially controversial. In other words, color reproduction under different illuminant conditions or between different types of media such as a display and a printer cannot be achieved in a conventional colorimetric color reproduction method. Color appearance on a display varies under different illuminations, because different illuminations have different effects on the color appearance. A color conversion method in this case has not been developed.

SUMMARY OF THE INVENTION

A color reproduction terminal apparatus in accordance with the present invention includes a color camera with a known characteristic, always or adequately captures images on a display surface using the camera from a remote position, and measures a color reproduction characteristic of the display. In addition, the terminal apparatus automatically generates a display profile optimized for a user's own color display. In an application such as an interactive television (TV) meeting or a remote medical system, the display and the color camera are normally placed on the user side, and therefore, installation of an additional color camera as a new apparatus is not required.

A display measurement method defined by International Electrotechnical Commission (IEC) / TC100 or the like describes the measurement from a spaced position at a certain distance from a display, especially in relation to a liquid crystal display (LCD). The color reproduction terminal apparatus in the present invention can also be used fir such measurement. A profile-generating part is placed not in a user terminal but in a color reproduction server on a network in order to improve flexibility of an algorithm. The user terminal downloads, from the color reproduction server, characteristic data of the color camera and color patch data used for the measurement of the display. Then, the user terminal measures the display characteristic and transmits a measurement result to the color reproduction server. The color reproduction server generates the user's display profile based on this measurement result, and therefore, the user terminal can automatically download a color conversion profile optimized for his/her own display.

In a network color reproduction system provided in the present invention, the color reproduction server stores a color conversion program executable at the user terminal. The user terminal automatically downloads this program and performs the color management. This is performed by a World Wide Web (WWW) browser and JAVA applet in the present Internet.

A color reproduction terminal provided in the present invention includes a simple illuminant light sensor. This sensor captures ambient illumination during image-capturing by the color camera at the terminal and during viewing the display. Based on the obtained illuminant light information, a colorimetric value indicated at the user terminal is corrected. In this way, the reproduced color on the display is accurately corrected under various environments such as in a darkroom, in a general room, or out of doors.

In the color reproduction method In the color reproduction system in accordance with the present invention, conventional XYZ values (tristimulus values) are matched, and additionally, matching in the color appearances and matching in spectral distributions are effected.

BRIEF DESCRIPTION OF THE DRAWINGS

Fig. 1 is a block diagram of a color reproduction terminal apparatus in accordance with a first exemplary embodiment of the present invention.
Fig. 2 is an external view of the color reproduction terminal apparatus in accordance with the first exemplary embodiment.
Fig. 3 shows three types of setting methods of a camera head in the color reproduction terminal apparatus.
Fig. 4 is an external view of a color reproduction terminal apparatus using a projector.
Fig. 5 shows an operation of a color reproduction terminal apparatus that supports color management.
Fig. 6 shows an operation of a color reproduction terminal apparatus that does not support color management.
Fig. 7 is a block diagram of a network color reproduction system in accordance with the first exemplary embodiment.
Fig. 8 is a flowchart for generating a display profile in accordance with the first exemplary embodiment.
Fig. 9 is a block diagram of a color reproduction terminal apparatus in accordance with a second exemplary embodiment.
Fig. 10 is an external view drawing of the color reproduction terminal apparatus in accordance with the second exemplary embodiment.
Fig. 11 is a block diagram of a network color reproduction system used for network shopping in accordance with the third exemplary embodiment.
Fig. 12 is a flowchart for an operation of the network color reproduction system used for network shopping.
Fig. 13 is a flowchart for a correcting process of illumination, chromatic adaptation, and contrast.
Fig. 14 is a flowchart for a correcting process of illumination, chromatic adaptation, and contrast of a color reproduction terminal apparatus in accordance with a fourth exemplary embodiment.
Fig. 15 is a block diagram of a network color reproduction system used for network shopping in accordance with a fifth exemplary embodiment.
Fig. 16 is a flowchart for an operation of the network color reproduction system used for network shopping in accordance with the fifth exemplary embodiment.
Fig. 17 shows a multi-dimensional primary color conversion process in the network color reproduction system.
Fig. 18 is a block diagram of a network color reproduction system used for a remote medical care service in accordance with a sixth exemplary embodiment.
Fig. 19 is a flowchart for an operation of the network color reproduction system used for the remote medical care service.
Fig. 20 shows a conventional color reproduction terminal apparatus.

DESCRIPTION OF THE PRERERRED EMBODIMENT

(Preferred embodiment 1)

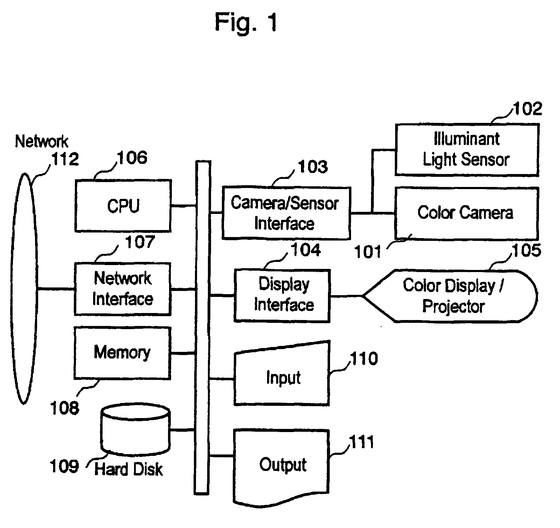

Fig. 1 illustrates a structure of a color reproduction terminal apparatus in accordance with embodiment 1.

The color reproduction terminal apparatus in Fig. 1 has a function for accurately displaying a color image downloaded through a network on a color display. This terminal apparatus is constituted with CPU 106, network interface 107, memory 108, hard disk 109, color display/projector 105, color camera 101, illuminant light sensor 102, input unit 110, and output unit 111.

Color camera 101 is used for capturing interactive picture images or screen images in a remote medical care service or a TV meeting, and for measuring a screen of display 105 for color management. Illuminant light sensor 102 obtains image-capturing environment information of color camera 101 for the color management and Illuminant information under a viewing environment where display/projector 105 is placed. Some of such computer systems have an OS having built-in CMS, and others have an OS having no built-in CMS. The present invention considers both cases, and does not impose a specific restriction.

This terminal apparatus, for measuring a screen of a user display, employs not a special sensor but an inexpensive and simple color camera which is usually used for a TV meeting. Color indicated on the display can be measured from a position near an observer's point of view, by designing a support and a camera bead of the color camera to make a direction and a position of the color camera changeable.

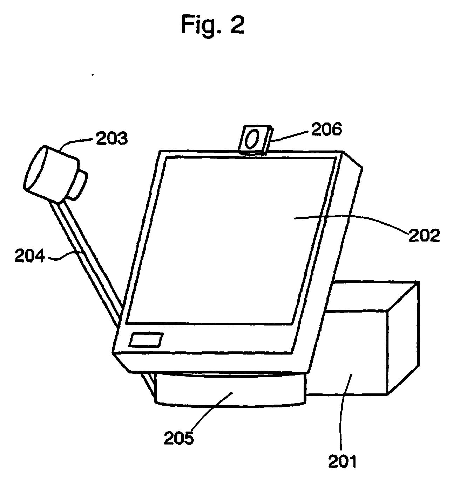

Fig. 2 is a perspective view of the color reproduction terminal apparatus in accordance with this embodiment. Color camera 203 is supported by a camera arm 204. Camera arm 204 is movably connected with a display table 205, and a camera head can be also freely rotated. In this mechanism, color camera 203 is fixed to a position arbitrary in relation to display screen 202. Fig. 2 illustrates just a concept, and various actual mechanisms, in addition to this example, are within the scope of the present invention. A signal from color camera 203 is fed into a computer system 201 through display table 205, though this is not shown in Fig. 2. This signal is an analog or digital video signal. Illuminant light sensor 206 is used for obtaining viewing illuminant information of display screen 202 and color camera 203. Color camera 203 with a filter attached to its lens and an additional signal processor can be used in place of illuminant light sensor 206.

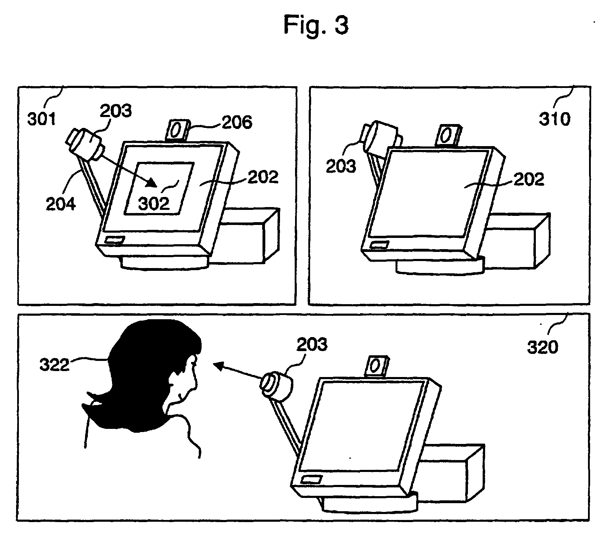

Fig. 3 shows setting examples of color camera 203 in three types of operations of the color reproduction terminal apparatus in accordance with this embodiment.

In example 301 in Fig. 3, a color reproduction characteristic of display 202 is measured for characterization or calibration of display 202. Color camera 203, which is directed to a screen of display 202, captures displayed color or color patch 302, and the captures signal is taken into computer 201. At this time, usually, illumination in a room is preferably set under a darkroom state. Color camera 203 is preferably set facing the screen of display 202, and is spaced by a distance usually selected by a user, and camera arm 204 has a freedom applicable to it.

Example 310 shows a setting of the color reproduction terminal apparatus of this embodiment in an application in which a color image is displayed and observed on display 202 through a network, such as in network shopping or an electronic museum. In this case, color camera 203 is not required, and is folded so that it does not disturb the viewing over the front of the display. Color camera 203 may always capture the display screen to perform color management of display 202.

In example 320, an application to a remote medical care service or a TV meeting is assumed. Because static or dynamic images formed by capturing an image of the face of user 322 with color camera 203 are transmitted between a plurality of users, the head of color camera 203 is rotated and set at a position for capturing the image of the face of user 322.

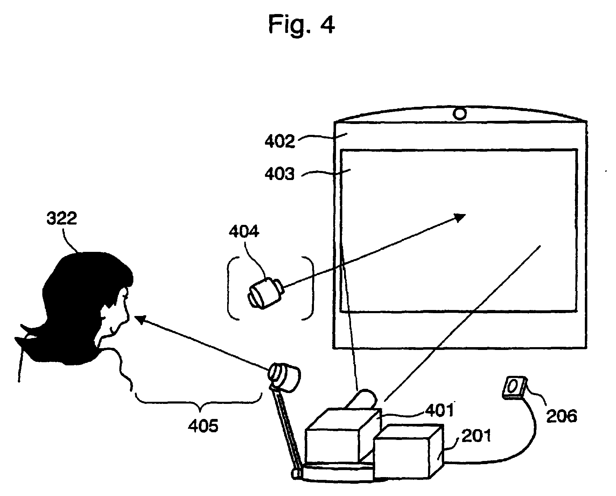

In Fig. 3, a cathode ray tube (CRT) or LCD is used as the display. On the other hand, Fig. 4 shows a state where a projector is used. This apparatus comprises projector 401 used instead of the CRT or LCD display, and a screen 402. Reference numeral 404 denotes a camera head directed to the screen and to enable colorimetry of projected color image 403. Reference numeral 405 denotes a camera head photographing user 322. Hereinafter, the display includes the projector.

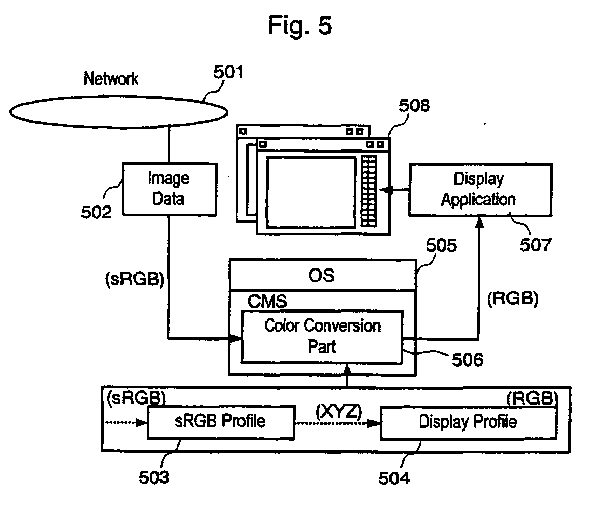

Fig. 5 is a schematic diagram of a process of CMS in a color reproduction terminal apparatus of embodiment 1. In many present computers, CMS is embedded in the OS. Variation of reproduced colors caused by difference of applications can be eliminated by the CMS of embodiment 1.

The CMS is constituted with color conversion part 506, i.e. a software module for performing a color conversion process of a color image, and color conversion profile 504, i.e., a color reproduction characteristic file of a color device such as a display included in color conversion part 506. Color conversion profile 504 is supplied by a manufacturer that produces a color device such as a color camera or a color display. In the CMS, a color oonversion profile of a source-side color device converts a device-dependent color space of the color image to a device-independent color space, and then a color conversion profile of a destination-side color device converts the device-independent color space to a device-dependent color space.

For example, when a color image through the Internet is observed by a user's display, the color image through the Internet is mostly represented in a standard red-green-blue (sRGB) color space. Color image 502 sent through Internet 501 is converted to an XYZ color space with sRGB profile 503, and is converted from the XYZ color space to an RGB color space with user's color conversion profile 504 in color conversion part 506 on a user PC. Then, the image is displayed on display 508 at a correct RGB value.

Such a method that XYZ color space is matched to perform color reproduction is executed in a relatively simple system, and is frequently used. But it is hardly said that this method is really accurate. This is based on the following facts.

(1) Color displacement is caused even when displaying a color of the same XYZ value is intended, because maximum luminance or color range capable of being tapped-off varies for each display and color range mapping is performed.
(2) Color reproduction by the method where the XYZ value is matched is allowed only when the same type of media are observed under the same illumination, but is not allowed when illumination varies or an actual object is visually compared with an image on the display. In particular, a color appearance model has been studied and standardized as "color reproduction between cross media," and an algorithm relating thereto has been developed.

For performing higher accuracy color reproduction while considering the facts mentioned above, the color reproduction terminal apparatus of this embodiment includes a sensor for measuring illumination in an environment where the user display is placed. In this apparatus, the color conversion profile generated from values measured by this sensor and the color conversion part for carrying out the actual color reproduction using this color conversion profile are constituted as a stationary module. In addition, in anticipation that research study results of color appearance models will be hereinafter sequentially standardized, the apparatus has a constitution where a color conversion software module is downloaded from an individual color reproduction server placed on the network.

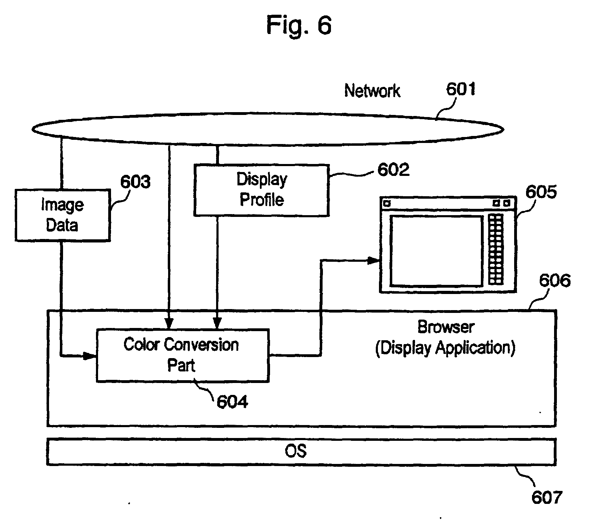

Fig. 5 and Fig. 6 show a software structure in the color reproduction terminal apparatus in accordance with the present invention. Fig. 5 shows the apparatus in which the CMS is embedded in the OS of the color reproduction terminal, and Fig. 6 shows the apparatus in which the CMS is not embedded. In Fig. 6, it is assumed that the color conversion software module is downloaded from network 601 to color conversion part 604. The CMS function is realized not at the OS level but at application level 606 such as a network browser.

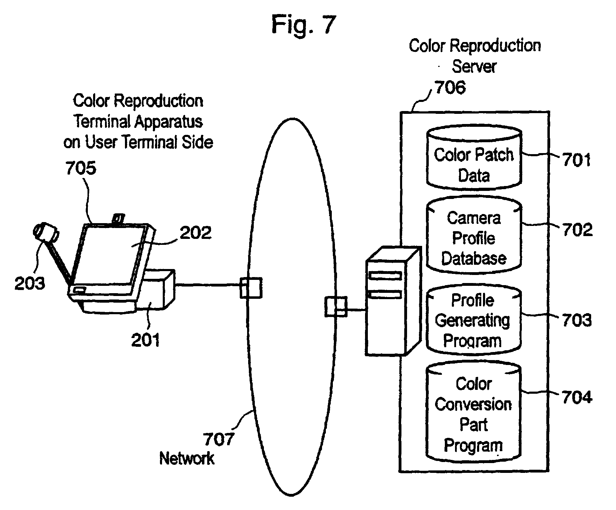

Fig. 7 shows a structure of a network color reproduction system in accordance with this embodiment. Color reproduction terminal apparatus 705 as a user terminal and color reproduction server 706 are placed on network 707. In server 706, the following elements are stored:

(a) color patch data 701;
(b) camera profile database 702 for storing a color conversion profile of a camera in the user terminal;
(c) profile generating program 703 for generating a display profile of the user terminal; and
(d) color conversion part program 704 that is downloaded to the user terminal and is used to perform color conversion.

These elements are required for performing characterization of the display of terminal apparatus 705.

Color patch data 701 comprises tens of color patched data represented by RGB data, and is used to measure the color reproduction characteristic of the display. Camera profile database 702 is produced for each product basically by a camera manufacturer. A user can download an image-capturing characteristic of a camera through network 707, based on information such as a model of the camera actually used in color reproduction terminal apparatus 705 on the user terminal side. Profile generating program 703 is a program for generating the display profile discussed below. Color conversion part program 704 is a module for performing color conversion not on color reproduction server 706, but on terminal apparatus 705 after being sent into terminal apparatus 705 on the user terminal side.

A procedure is described for carrying out the color reproduction using this network color reproduction system. The user must initially calibrate a device of his/her own color reproduction terminal apparatus 705. In this embodiment, this calibration is performed as follows:

(1) capturing display screen 202 with color camera 203 attached to user terminal 705;
(2) sending captured data to color reproduction server 706, and causing the server to generate the display profile; and
(3) downloading this profile to user terminal 705.

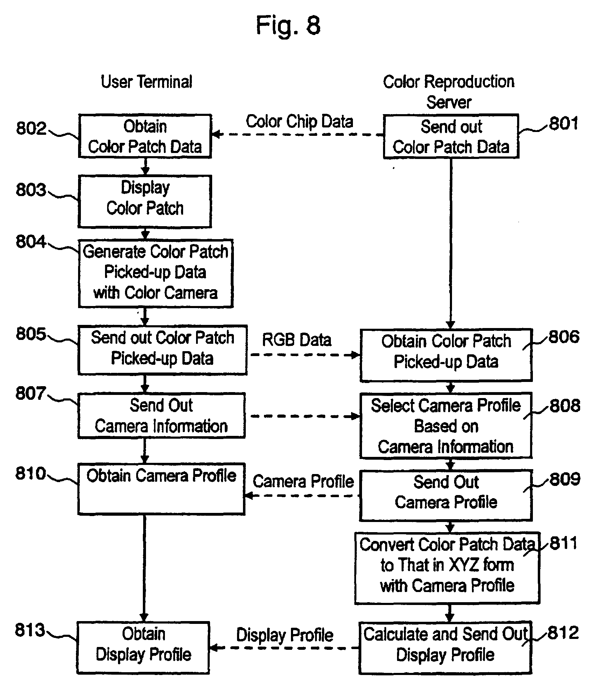

Fig. 8 shows this procedure.

At step 801, color patch data 701 having a plurality of colors is transmitted from color reproduction server 706 in the RGB data form in response to a request of color reproduction terminal apparatus 705. At step 802 terminal apparatus 705 obtains color patch data 701 through network 707, and at step 803 terminal apparatus 705 displays color patch data 701 on display 202.

In terminal apparatus 705, at step 804, the user sets camera 203 at a position indicated in example 301 in Fig. 3, and captures a color patch image on display 202 using camera 203. The captured color patch image is obtained as RGB data, after a process for reducing data amount such as a calculation of an average value of a plurality of representative picture elements of each color patch from the image. This RGB data value is derived by reading the color patch data with the camera, is different from the original RGB data value of the color patch (obtained at step 802), and is affected by a color development characteristic of display 202 and an image-capturing characteristic of camera 203.

At step 805 and step 806, the RGB data of the image captured color patch is sent out to color reproduction server 706. At step 807, camera information such as the model number of camera 203 used for capturing the image of color patch data 701 is sent out from terminal apparatus 705 to color reproduction server 706.

At step 808, server 706 searches camera profile database 702 based on the obtained camera information to select a camera profile. At step 809 and step 810, terminal apparatus 705 obtains the selected profile. The camera information, more specifically, means the product number of the camera being used and the like.. An aging variation or individual difference for the same model in relation to characteristics of a CCD or a color filter of the camera is considered to be relatively small.

At step 811, server 706 converts the RGB data of color patch data 701 to XYZ data with the camera profile. At step 812, server 706 derives a display profile of terminal apparatus 705 from the XYZ data. Because color indicated by this XYZ data is color-reproduced when display 202 develops color of color patch data 701, a color reproduction characteristic of display 202 can be calculated if an image-capturing characteristic of camera 203 is available.

At step 813, the display profile calculated by server 706 is sent to terminal apparatus 705, and terminal apparatus 705 obtains its own display profile.

As discussed above, in this embodiment, because a display profile generating algorithm is placed on a color reproduction server outside the user terminal, it can be arbitrarily upgraded and is variously advantageous for the user. These procedures are written in a program executable by a computer, are stored in a hard disk or a portable storage medium, and axe executed in terminal apparatus 705 and server 706.

(Preferred embodiment 2)

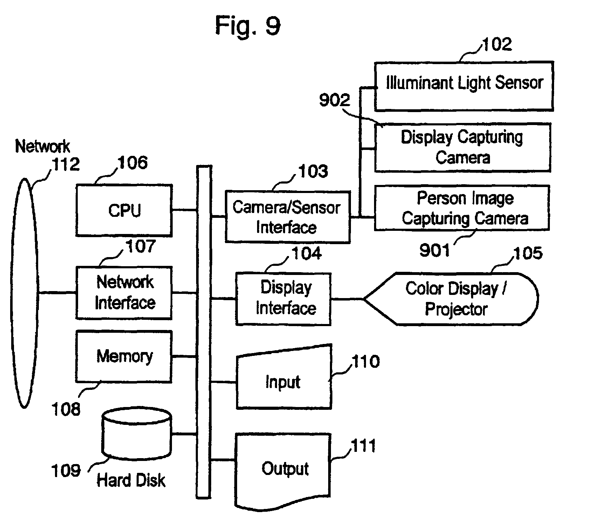

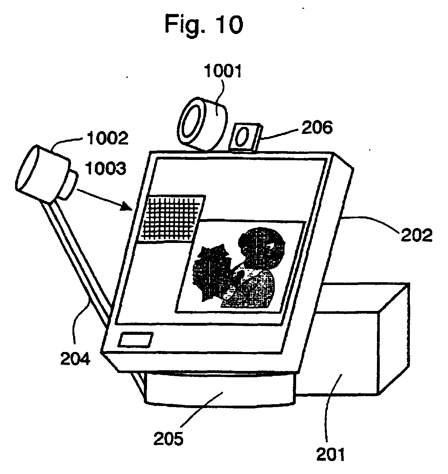

Fig. 9 illustrates a structure of a color reproduction terminal apparatus in accordance with embodiment 2. The Fig. 9 apparatus differs from a structure in Fig. 1 in embodiment 1 in that the structure in Fig. 9 has person image-capturing camera 901 and display capturing camera 902. As shown in Fig. 10, person image-capturing camera 1001 captures the image of the user's face on the color reproduction terminal apparatus, and display capturing camera 1002 always or intermittently captures color patch region 1003 on display 202.

In this structure, one additional camera is required. However, in an interactive application between users such as a remote medical care service discussed below, the CMS in the color reproduction terminal apparatus always operates, and can correspond to time-dependent variation of light in a viewing environment.

The flowchart shown in Fig. 8 is applied also in this embodiment, but the process in Fig. 8 is always performed at a certain interval differently from embodiment 1.

(Preferred embodiment 3)

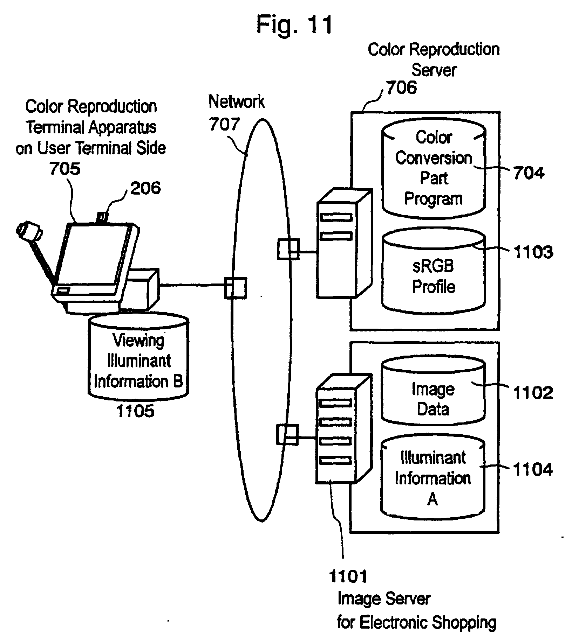

Fig. 11 shows a structure of a network color reproduction system in an application where network shopping on a network is assumed. A purpose of this system is to reproduce a color image of a commodity, i.e., contents of the network shopping, with correct color on a color reproduction terminal apparatus on a user terminal side. Here, the correct color is defined as the color which appears when the commodity is actually placed in a user's environment. Therefore, in the color reproduction terminal apparatus, processes such as illumination and chromatic adaptation corrections are required.

In the network color reproduction system in Fig. 11, the network 707 is connected with the following elements:

(1) color reproduction terminal apparatus 705 on the user side;
(2) color reproduction server 706; and
(3) image server 1101 for network shopping for providing contents image data 1102 for network shopping and image-capturing illuminant information 1104. The image-capturing illuminant information means one of spectral distribution information $Es(\lambda)$ and chromaticity information (Xs, Ys, Zs) of illumination when the image of the commodity of the network shopping is captured.. Color reproduction server 706 stores color conversion part program 704 and sRGB profile 1103, and sends them to terminal apparatus 705. Terminal apparatus 705 performs color conversion.

The sRGB profile is a file in which a conversion characteristic between an sRGB color space and an XYZ color space is described, is generated with a fixed calculation equation, and therefore, is independent of different apparatuses. This sRGB profile is not required to be in the color reproduction server and may be in the user terminal side.

Here, color specification of each color image on the server is defined as that on the sRGB color space that is virtually a standard in the present network world.

In the illustration of this embodiment, it is assumed that terminal apparatus 705 obtains a user display profile in advance due to the function of color reproduction server 706 in the processes shown by Fig. 7 and Fig. 8.

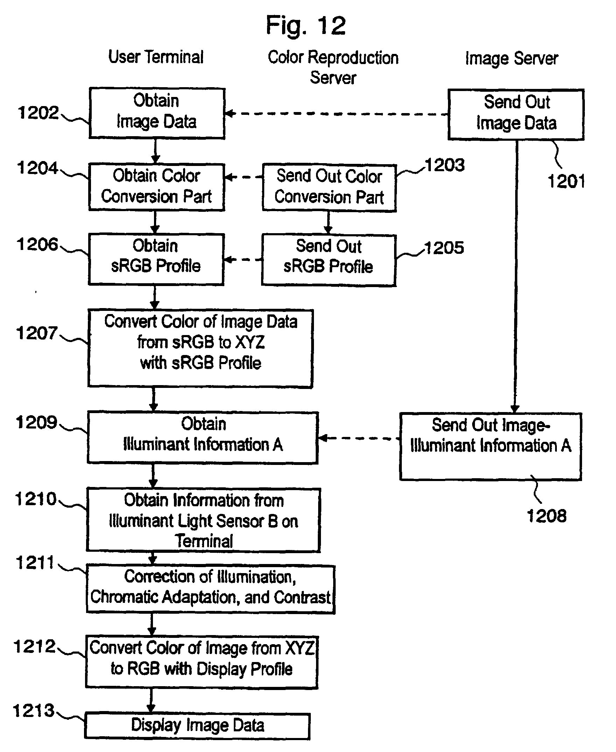

Fig. 12 is a flowchart for the color conversion operation of the network color reproduction system for network shopping.

At step 1201, image server 1101 sends out image data written in the sRGB form to terminal apparatus 705 in response to a request of terminal apparatus 705 on the user side. At step 1202, terminal apparatus 705 receives the image data.

At step 1203 and step 1204, terminal apparatus 705 obtains a color conversion part (a color conversion software module) from color reproduction server 706. This color conversion part is a program module executed by terminal apparatus 705. At step 1205 and step 1206, terminal apparatus 705 obtains an sRGB profile from color reproduction server 706.

At step 1207, the color conversion part of terminal apparatus 705 converts the image data from the sRGB form to the XYZ form using the sRGB profile.

At step 1208, image server 1101 sends out image-capturing illuminant information A1104 to terminal apparatus 705. Terminal apparatus 705 receives information A1104 at step 1209. At step 1210, illuminant light sensor 206 on terminal apparatus 705 obtains viewing illuminant information B1105, representing the illumination under which the user observes the image.

At step 1211, terminal apparatus 705 corrects illumination, chromatic adaptation, and contrast of the XYZ value, namely, the image data, based on image-capturing illuminant information A1104 and viewing illuminant information B1105. This correction compensates conventional CMS inadequacy where color appearance varies depending on illumination or chromaticity of white, and matches the XYZ value to the color appearance.

Terminal apparatus 705, at step 1212, converts the corrected XYZ value in relation to the illumination to an RGB value, i.e. a display device value with the already obtained own display profile (step 813 of Fig. 8), and, at step 1213, displays the color image on the display.

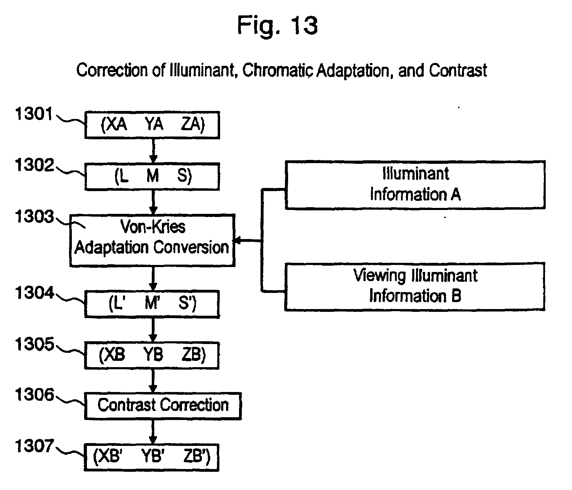

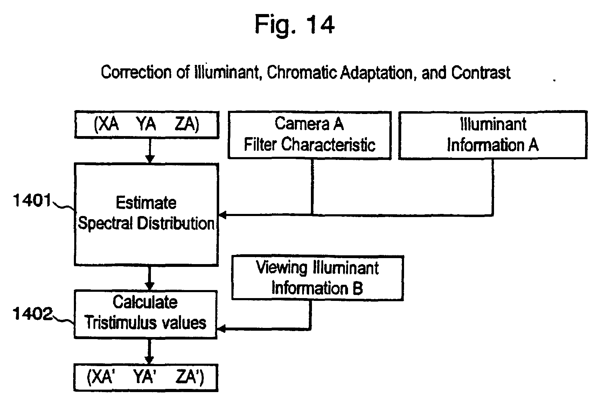

Fig. 13 and Fig. 14 illustrate details of illumination, chromatic adaptation, and contrast corrections at step 1211. In Fig. 13, (XA, YA, ZA) are tristimulus values XYZ when the image data is captured at step 1207 in Fig. 12. Illumination under which this image a captured is set as image-capturing illuminant information A. At step 1302, (XA, YA, ZA) are converted to cone response values (L, M, S) by a Hunt-Pointer-Estevez transformation (for example, refer to Naoya Katoh: "Practical Method for Appearance Match between Soft Copy and Hard Copy," SPIE Vol. 2170, 1994).

$$\begin{bmatrix} L \\ M \\ S \end{bmatrix} = \begin{bmatrix} 0.38971 & 0.68898 & -0.07868 \\ -0.22981 & 1.18340 & 0.04641 \\ 0 & 0 & 1 \end{bmatrix} \begin{bmatrix} XA \\ YA \\ ZA \end{bmatrix} = M \begin{bmatrix} XA \\ YA \\ ZA \end{bmatrix} \qquad (1)$$

At step 1303 a chromatic adaptation conversion from image-capturing illuminant information A to viewing illuminant information B is performed, and at step 1304, the converted values (L' M' S') are obtained. At step 1305, (L' M' S') are again converted to the XYZ form to obtain (XB, YB, ZB) under illumination B. These conversions are performed at a time in the following equation responsive to the Von-Kries rule.

$$\begin{bmatrix} XB \\ YB \\ ZB \end{bmatrix} = M^{-1} \begin{bmatrix} L\,max\,B & 0 & 0 \\ 0 & M\,max\,B & 0 \\ 0 & 0 & S\,max\,B \end{bmatrix} \begin{bmatrix} 1/L\,max\,A & 0 & 0 \\ 0 & 1/M\,max\,A & 0 \\ 0 & 0 & 1/S\,max\,A \end{bmatrix} M \begin{bmatrix} XA \\ YA \\ ZA \end{bmatrix} \qquad (2)$$

performed simultaneously in equation (2) response to the Von-Kries rule. In equation (2), LmaxA and LmaxB are maximum values of L under respective environments of illuminant information A and illuminant information B. Similarly, MmaxA and MmaxB are maximum values of M, and SmaxA and SmaxB are maximum values of S.

Then, at step 1306, contrast conversion is carried out. This corrects a phenomenon that an apparent gamma value varies under variation of illumination.

$$XB' = XB^{\gamma} \qquad (3)$$

$$YB' = YB^{\gamma}$$

$$ZB' = ZB^{\gamma}$$

At step 1307, (XB' YB' ZB') derived after the contrast conversion are output.

In the procedures discussed above, the same color appearance as that of the captured contents is reproduced on the terminal apparatus. The method shown here is written as a program executable by the computer, is stored in storage media, and is executed at color reproduction server 706, server 1101, and terminal apparatus 705.

(Preferred embodiment 4)

Fig. 14 is a flowchart for a correcting process of illumination, chromatic adaptation, and contrast of a color reproduction terminal apparatus in an application such as network shopping in accordance with embodiment 4. This embodiment is different front embodiment 3 in illumination, chromatic adaptation, and contrast corrections shown at step 1211 in Fig. 12. The different part is illustrated in the drawing and discussed below.

In embodiment 4, illuminant light sensor 206 of the color reproduction terminal apparatus on a user terminal side can measure spectral distribution of illumination. The system in embodiment 3 corrects the XYZ values by deriving the cone response LMS values from the derived XYZ values, estimating the chromatic adaptation using the Von-Kries rule, and performing contrast conversion. This is a method for matching color appearance mainly using a human-visual-sense-characteristic, and is called color appearance matching. In embodiment 4, spectral distribution of an object is estimated and tristimulus values are reproduced under viewing illumination.

The correcting process of illumination, chromatic adaptation, and contrast is illustrated in detail in Fig. 14.

Processes at step 1401 are hereinafter described. Tristimulus values (XA, YA, ZA) calculated in relation to image-capturing illuminant condition A (Es($\lambda$)) are represented by the following integration, where f($\lambda$) is object spectral distribution.

$$XA = \int x(\lambda) Es(\lambda) f(\lambda) d\lambda \qquad (4)$$

$$YA = \int y(\lambda) Es(\lambda) f(\lambda) d\lambda$$

$$ZA = \int z(\lambda) Es(\lambda) f(\lambda) d\lambda$$

In equation (4), an infinite-dimensional quantity f($\lambda$) is converted to a 3-dimensional quantity with integration. For estimating the infinite-dimensional quantity f($\lambda$), this equation must be solved inversely. Two solution methods are available.

In a first method, the infinite-dimensional quantity f($\lambda$) is considered as a P-dimensional vector, and a P-dimensional quantity is directly estimated from the three-dimensional quantity. At first, the equation is written in a discrete form and is represented as a matrix. The integration is performed in a visible wavelength range, i.e., $\lambda$ is between 380 nm and 780 nm. Representing all functions of $\lambda$ as a P-dimensional vector, equation (4) becomes equation (5).

$$\mathbf{X = Tf} \qquad (5)$$

where,

$$\mathbf{X} = \begin{pmatrix} XA & YA & ZA \end{pmatrix}^t \qquad (6)$$

$$\mathbf{f} = \begin{pmatrix} f_1 & f_2 & \cdots & f_P \end{pmatrix}^t$$

$$\mathbf{T} = \begin{bmatrix} x_1 Es_1 & x_2 Es_2 & \cdots & x_P Es_P \\ y_1 Es_1 & y_2 Es_2 & \cdots & y_P Es_P \\ z_1 Es_1 & z_2 Es_2 & \cdots & z_P Es_P \end{bmatrix}$$

and $3 \times P$ matrix T is a known matrix generated from discrete forms $x_j$, $y_j$, $z_j$ of color matching functions $x(\lambda)$, $y(\lambda)$, and $z(\lambda)$, and image-capturing illumination $Es_j$. Therefore, the unknown vector f must be solved from viewing quantity vector X and $3 \times p$ matrix T, but cannot be accurately solved because dimension P of the unknown vector f is higher than dimension 3 of vector X. Estimated vector f is written by

$$\mathbf{f} = \mathbf{T}^t (\mathbf{T}\mathbf{T}^t)^{-1} \mathbf{X} \qquad (7)$$

as a pseudo inverse matrix solution, or

$$\mathbf{f} = E\{\mathbf{f}\mathbf{f}^t\}\mathbf{T}^t (\mathbf{T}E\{\mathbf{f}\mathbf{f}^t\}\mathbf{T}^t)^{-1} \mathbf{X} \qquad (8)$$

as a Wiener estimation solution.

In the Wiener estimation solution, self-correlation matrix $E(ff^t)$ is provided from information provided in advance.

In a second method, infinite-dimensional quantity $f(\lambda)$ is estimated by assuming that $f(\lambda)$ is developed and represented as a sum of products of known R-dimensional bases $e_i(\lambda)$ and weight coefficients $a_i$ by a principal component analysis of $f(\lambda)$ or the like.

$$f(\lambda) = \sum_{i=1}^{R} a_i e^i(\lambda) \qquad (9)$$

This equation is written by

$$\mathbf{f} = \mathbf{e}\,\mathbf{a} \qquad (10)$$

in matrix representation, where,

$$\mathbf{f} = \begin{pmatrix} f_1 & f_2 & \cdots & f_P \end{pmatrix}^t \qquad (11)$$

$$\mathbf{a} = \begin{pmatrix} a_1 & a_2 & \cdots & a_R \end{pmatrix}^t$$

$$\mathbf{e} = \begin{bmatrix} e_1^1 & e_1^2 & \cdots & e_1^R \\ e_2^1 & e_2^2 & \cdots & e_2^R \\ \vdots & \vdots & \ddots & \vdots \\ e_P^1 & e_P^2 & \cdots & e_P^R \end{bmatrix}$$

where

$$e_i^j$$

is the i-th component of the j-th base vector $e^j$ ($\lambda$) in discrete representation. Substituting equation (10) for equation (5),

$$\mathbf{X} = \mathbf{Tea} = \mathbf{Ua} \qquad (12)$$

is derived, using $3 \times R$ matrix U, namely, the product of $3 \times P$ matrix T and $P \times R$ matrix **e**. Estimation of vector **a** from this equation involves estimation of an R-dimensional vector from a 3-dimensional vector. If R is in a range of 4 or 5, this method is sufficiently practical, and is more accurate than the first method. The estimation method is similar to that of the first method. As a pseudo inverse matrix solution,

$$\mathbf{a} = \mathbf{U}^t (\mathbf{U}\mathbf{U}^t)^{-1} \mathbf{X} \qquad (13)$$

is derived, or as a Wiener estimation solution,

$$\mathbf{a} = E\{\mathbf{a}\mathbf{a}^t\}\mathbf{U}^t (\mathbf{U}E\{\mathbf{a}\mathbf{a}^t\}\mathbf{U}^t)^{-1}\mathbf{X} \qquad (14)$$

is derived. After vector **a** is derived, vector **f** is derived with equation (9). Processes at step 1401 finish here.

After object spectral distribution vector **f**, i.e., infinite-dimensional quantity $f(\lambda)$ is estimated, at step 1402, viewing illuminant information B ($E_o(\lambda)$) is obtained from illuminant light sensor 206, and tristimulus values (XA', YA', ZA') under viewing illumination are calculated by integration of $f(\lambda)$ and $E_o(\lambda)$.

$$XA' = \int x(\lambda) Eo(\lambda) f(\lambda) d\lambda \qquad (15)$$

$$YA' = \int y(\lambda) Eo(\lambda) f(\lambda) d\lambda$$

$$ZA' = \int z(\lambda) Eo(\lambda) f(\lambda) d\lambda$$

(Preferred embodiment 5)

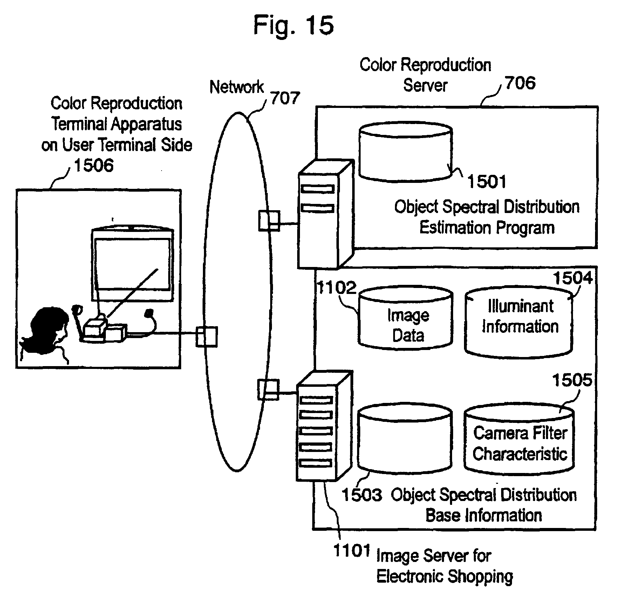

Fig. 15 shows a structure of a network color reproduction system in an application such as network shopping in accordance with embodiment 5 of the present invention.

The system in accordance with this embodiment estimates spectral distribution of an object image, and performs color reproduction for reproducing it with a multi-primary-color projector or a multi-primary-color display at an output terminal Multi-color color reproduction has two advantages. As a first advantage, spectral color reproduction is easier comparing with the reproduction where only tristimulus values XYZ are matched. When the spectral color reproduction can be realized, a conventional problem, i. e., that color appearance varies depending on illumination even if the same XYZ values are employed, is resolved. As a second advantage, a larger color gamut than that achieved by three-primary-color reproduction can be realized.

The network color reproduction system in the network shopping as shown in Fig. 15 is constituted with color reproduction server 706, image server 1101 for network shopping, and color reproduction terminal apparatus 1506. Object spectral distribution estimating program 1501 is stored in color reproduction server 706. This program is sent from server 706 to terminal apparatus 1506 where it is operated. If this program is operated on server 706, a huge amount of spectral characteristic image data must be transferred to terminal apparatus 1506 through network 707. To avoid this, this system operates this program in the terminal apparatus. Image data 1102, i.e., contents, are stored in image server 1101. The stored form of image data 1102 is N-band color image captured by a normal color camera or a multi-spectral camera in this embodiment. When N=3, this is an RGB image captured by a usual color camera. In addition, the stored form can also be spectral distribution data or compressed spectral data.

The spectral distribution of a natural matter, i.e., an object, is generally infinite dimensional, but is assumed discretely as M-dimensional data (M > N). This M-dimensional data is about 100-dimensional data sampled from a normal visible range, namely, about a 400 nm spectral range between 380 nm and 780 nm, every 4nm. Actual spectral distribution, however, has a degree of freedom not so high as 100, and usually, can be sufficiently represented by a relatively small number of base vectors.

Image server 1101 stores the following information:

(1) object spectral distribution base information 1503, namely, R base vectors sampled every specific image in a principal component analysis based on the analysis of images stored as the contents;
(2) image-capturing illuminant spectral information 1504 when a content's image is captured; and
(3) filter information 1505 of the color camera with which the contents image are captured.

Terminal apparatus 1506 has a projector where a number of primary colors can be easily extended over three, and this projector is observed in a darkroom.

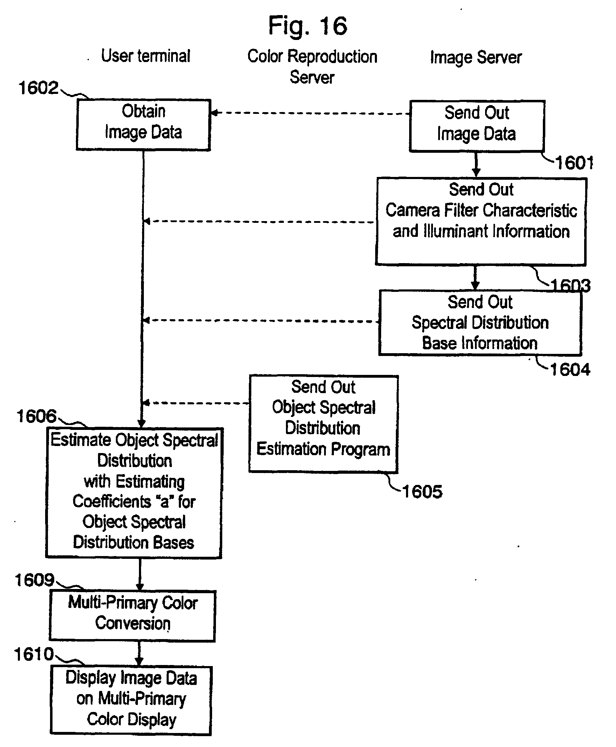

Fig. 16 illustrates an operation of a network color reproduction system in accordance with this embodiment. At step 1601 and step 1602, terminal apparatus 1506 receives image data 1102 from image server 1101 responsive to a request of terminal apparatus 1506. At step 1603, terminal apparatus 1506 obtains camera filter characteristic information of the camera that captures image data 1102 from image server 1101, and image-captured illuminant spectral information during capturing. At step 1604, terminal apparatus 1506 obtains spectral distribution base information 1503, namely, R base vectors of the spectral distribution of an object included in image data 1102.

Then, at step 1605, color reproduction server 706 sends out object spectral distribution estimating program 1501 to terminal apparatus 1506. At step 1606, spectral distribution of image data 1102 is estimated. The estimation is achieved by estimating R weight coefficients $a_i$ in relation to R bases based on an N-band color signal. The estimation without using any base vector generally has poor accuracy because it is a considerably difficult work in which variables of P-dimensional spectral data (about 50 dimensions) must be estimated from N bands. Employing the base vectors improves estimation accuracy. In this estimation method, a pseudo inverse matrix solution or a Wiener estimation solution can be used. Then, the k-th sensor output $g_k$ of the N bands can be represented as follows, using sensor spectral characteristic $S_k(\lambda)$, illumination $Es(\lambda)$, and object spectral reflectance $f(\lambda)$.

$$g_k = \int S_k(\lambda) Es(\lambda) f(\lambda) d\lambda \qquad (16)$$

Assuming that $f(\lambda)$ is developed on R bases as equation (9) due to its statistical property, equation (16) is written as

$$g_k = \sum_{i=1}^{R} a_i \int S_k(\lambda) Es(\lambda) e^i(\lambda) d\lambda \qquad (17)$$

Writing this in a discrete form and representing this as a matrix,

$$g = Tea \tag{18}$$

where,

$$g = \begin{pmatrix} g_1 & g_2 & \cdots & g_N \end{pmatrix}^t \tag{19}$$

$$T = \begin{bmatrix} S_{11}Es_1 & S_{12}Es_2 & \cdots & S_{1P}Es_P \\ S_{21}Es_1 & S_{22}Es_2 & \cdots & S_{2P}Es_P \\ \vdots & \vdots & \ddots & \vdots \\ S_{N1}Es_1 & S_{N2}Es_2 & \cdots & S_{NP}Es_P \end{bmatrix}$$

$$e = \begin{bmatrix} e_1^1 & e_1^2 & \cdots & e_1^R \\ e_2^1 & e_2^2 & \cdots & e_2^R \\ \vdots & \vdots & \ddots & \vdots \\ e_P^1 & e_P^2 & \cdots & e_P^R \end{bmatrix}$$

Because the form of equation (18) is finally the same as that of equation (12), vector **a** is estimated and f($\lambda$) is derived using the pseudo inverse matrix solution or the Wiener estimation solution, as shown in equation (13) and equation (14).

At step 1609, multi-primary-color conversion is performed for reproducing the derived spectral distribution as it is. This conversion is required in a general case that the number of dimensions of the derived base vector is different from the number of primary colors finally reproduced. At step 1610, data derived by the multi-primary-color conversion is displayed on a multi-primary-color projector.

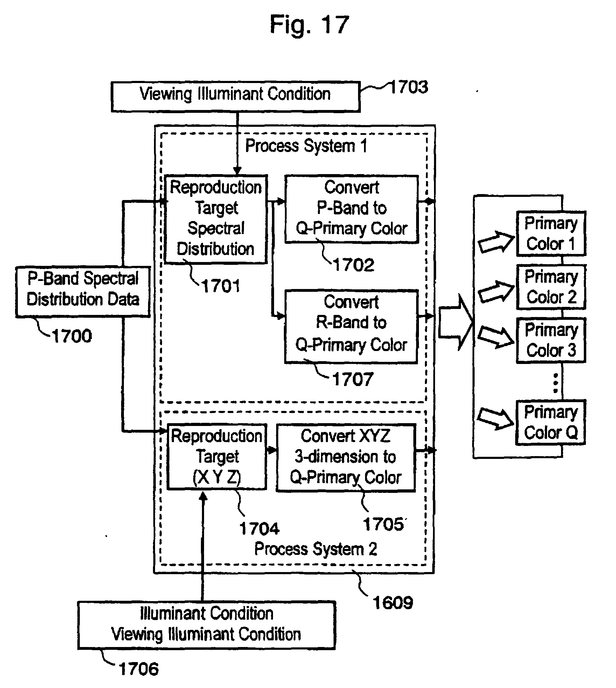

Now, Fig. 17 will be discussed, shows two process systems in the multi-primary-color conversion process shown at step 1609.

Process system 1 intends spectral color reproduction as a color reproduction target. Based on estimated P-band (dimensional) spectral distribution data 1700 of a color image, reproduction target spectral distribution 1701 is derived considering viewing illuminant condition 1703. At step 1702, color conversion 1702 is performed for converting P-band primary colors to Q primary colors, namely, P-dimension to Q-dimension, so as to obtain a spectral distribution as close to spectral distribution 1701 as possible.

If the viewing illuminant condition is inside of a darkroom, reproduction target spectral distribution 1701 is spectral distribution data 1700 itself of an object. Spectral distribution 1701 is reproduced using a spectral distribution of Q primary colors. An approximate value of infinite-dimensional quantity f($\lambda$) is generated by using spectral characteristic $L_i(\lambda)$ (1<=i<=Q) of Q primary colors and weight coefficients $w_i$.

$$f(\lambda) = \sum_{i=1}^{Q} w_i L^i(\lambda) \tag{20}$$

Representing this in a matrix,

$$\hat{f} = LW \tag{21}$$

is derived, where

$$\hat{\mathbf{f}} = \begin{pmatrix} \hat{f}_1 & \hat{f}_2 & \cdots & \hat{f}_P \end{pmatrix}^t \tag{22}$$

$$\mathbf{L} = \begin{bmatrix} L_1^1 & L_1^2 & \cdots & L_1^Q \\ L_2^1 & L_2^2 & \cdots & L_2^Q \\ \vdots & \vdots & \ddots & \vdots \\ L_P^1 & L_P^2 & \cdots & L_P^Q \end{bmatrix}$$

$$\mathbf{W} = \begin{pmatrix} w_1 & w_2 & \cdots & w_Q \end{pmatrix}^t$$

Using least square error J as an evaluation standard of vector **f**,

$$\frac{\partial J}{\partial \mathbf{X}} = 0 \tag{23}$$

$$J = (\mathbf{f} - \hat{\mathbf{f}})^t (\mathbf{f} - \hat{\mathbf{f}})$$

is derived. Solving this, vector **W** can be calculated as the following pseudo inverse matrix.

$$\mathbf{W} = (\mathbf{L}^t \mathbf{L})^{-1} \mathbf{L}^t \mathbf{f} \tag{24}$$

When spectral data vector **f** is represented by a sum of R-dimensional bases as shown in equation (9), conversion from P-dimension to Q-dimension is not required. Multi-primary-color conversion 1609 is more easily realized by performing conversion 1707 from R-dimension to Q-dimension. In this case, vector **W** is represented, as shown below, using matrix **e** and vector **a** in equation (11).

$$\mathbf{W} = (\mathbf{L}^t \mathbf{L})^{-1} \mathbf{L}^t \mathbf{e} \mathbf{a} \tag{25}$$

In process system 2, tristimulus values are matched although multi-primary-color reproduction is performed. Reproduction target XYZ value 1704 is calculated from estimated spectral distribution 1700 using the I,age-capturing illuminant condition and viewing illuminant condition 1706. The 3-dimensional XYZ value is converted to Q primary color (Q>3). Target XYZ value 1704 is derived by multiplying spectral distribution by a color matching function and by integrating them, and is corrected wider an illuminant condition. This correction can be performed in either method shown in Fig. 13 or Fig. 14. The number of solutions of the conversion to Q primary color for generating the same XYZ value is infinite, but the solutions can be derived as shown below. For example,

$$\mathbf{X} = (\mathbf{SL})\mathbf{W} \qquad (26)$$

is assumed, where vector **X** represents target tristimulus values, and matrix **S** is a matrix which represents color matching functions $x(\lambda)$, $y(\lambda)$, and $z(\lambda)$ in discrete form.

$$\mathbf{X} = \begin{pmatrix} X & Y & Z \end{pmatrix}^t \qquad (27)$$

$$\mathbf{S} = \begin{bmatrix} x_1 & x_2 & \cdots & x_P \\ y_1 & y_2 & \cdots & y_P \\ z_1 & z_2 & \cdots & z_P \end{bmatrix}$$

As a pseudo inverse matrix solution of vector **W**,

$$\mathbf{W} = (\mathbf{SL})^t((\mathbf{SL})(\mathbf{SL})^t)^{-1}\mathbf{X} \qquad (28)$$

is derived.
As a Wiener estimation solution,

$$\mathbf{W} = E\{\mathbf{W}\mathbf{W}^t\}(\mathbf{SL})^t((\mathbf{SL})E\{\mathbf{W}\mathbf{W}^t\}(\mathbf{SL})^t)^{-1}\mathbf{X} \qquad (29)$$

is derived, where, self-correlation matrix of vector **W** is provided in advance.

(Preferred embodiment 6)

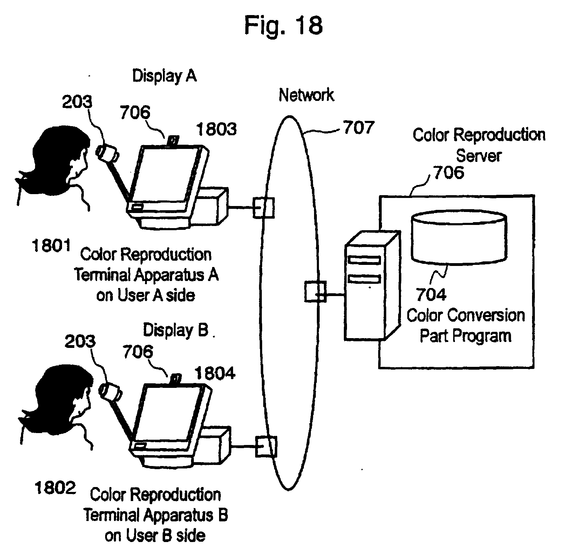

Fig. 18 shows a structure of a network color reproduction system applied to a remote medical care service system or a TV meeting system in accordance with embodiment 6. Images processed in this embodiment are moving images, which are generally different from those for network shopping.

Color reproduction terminal apparatus A1801 on a user A side, color reproduction terminal apparatus B 1802 on a user B side, and color reproduction server 706 are placed on network 707. Color conversion part program 704 is placed in server 706. Terminal apparatuses A1801, B1802 capture images of the faces of respective users, setting camera positions as shown in example 320 in Fig. 3. In the remote medical care service system, it is not required that both users see correct color, and color reproduction only on a doctor side is required to be accurate. A purpose of this system is to allow the user B to watch complexions or affected parts of opponents with accurate colors.

As a precondition, as shown in embodiment 1 and embodiment 2, users A, B obtain a camera profile, a display profile, a sRGB profile, and color conversion part program 704 from color reproduction server 706.

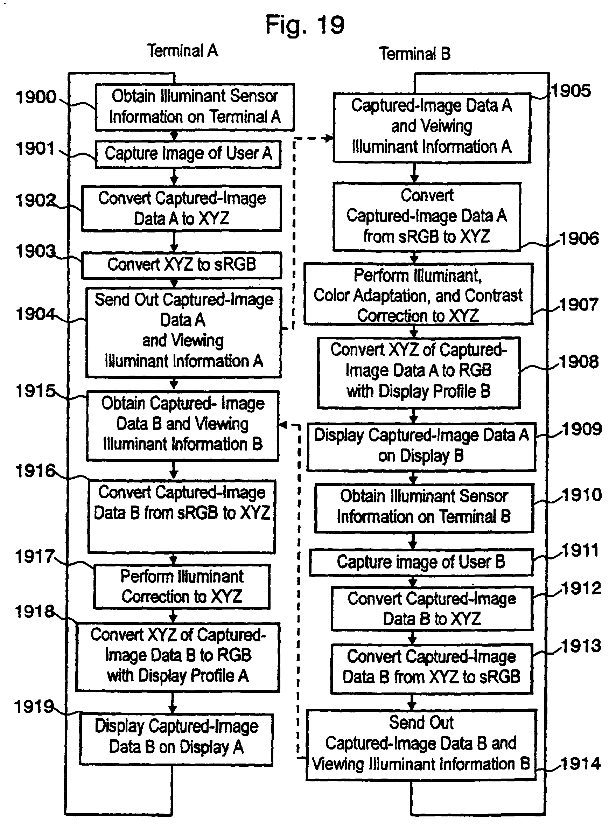

In Fig. 19, at step 1900, illuminant light sensor 206 attached to color reproduction terminal apparatus A1801 on the user A side obtains illuminant information A around terminal apparatus A1801. At step 1901, the image of user A is captured by a camera 203 to provide captured-image data A. At step 1902, color conversion part program 704 temporarily converts captured-image data A into the XYZ form using the camera profile A, and then, at step 1903, converts it to the sRGB form using the sRGB profile. At step 1904, captured-image data A in the sRGB form and viewing illuminant information A are sent to network 707.

Color reproduction terminal apparatus B1802 on user B side obtains captured-image data A and viewing illuminant information A at step 1905. At step 1906, terminal apparatus B1802 converts captured-image data A from the sRGB form to the XYZ form using the sRGB profile of color conversion part program 704. At step 1907, terminal apparatus B1802 converts captured-imageup data A(X Y Z) to captured-image data A(X' Y' Z') by correcting illumination, chromatic adaptation, and contrast using viewing illuminant information A. Terminal apparatus B1802 converts captured-image data A(X' Y' Z') to the RGB form for display B using display profile B at step 1908, and displays the image of user A on display B at step 1909. The color of captured-image data A on the user A side is accurately reproduced on terminal apparatus B1802.

On the other hand, for sending captured-image data B of terminal apparatus B1802 to terminal apparatus A1801 and reproducing its color, step 1900 to step 1909 discussed above are repeated.

In detail, image-capturing illuminant information B around terminal apparatus B1802 is obtained at step 1910, and user B is captured to provide captured-image data B at step 1911. Color conversion part program 704 converts captured-image data B to the XYZ form at step 1912, and converts it to the sRGB form at step 1913.

The converted sRGB captured-image data B and viewing illuminant information B are sent out onto the network at step 1914, and are received by terminal apparatus A1801 at step 1915. The terminal apparatus A1801 converts captured-image data B from the sRGB form to the XYZ form at step 1916, corrects captured-image data B(X Y Z) in relation to illumination, chromatic adaptation, and contrast at step 1917, converts the corrected data to the RGB form for display A at step 1918, and displays this RGB data at step 1919. Thus, the complexion of user B is correctly reproduced on the display A.

By repeating the processes discussed above, mutual complexions can be interactively and correctly reproduced on mutual displays, and thus network color reproduction is completed.

Although, the present invention has been fully decsribed by the way of examples with reference to the accompanying drawings, it should be understood that numerous variations, modifications, and substitutions, as well as rearrangements and combinations, of the proceding illustrative embodiments will be apparent to those skilled.

**Claims**

1. A color reproduction terminal apparatus comprising:

   color image display means for displaying a color image;
   characteristic capturing means for capturing a color reproduction characteristic of said color image display means and a viewing illuminant condition, by employing at least one of a color camera and a sensor; and
   color conversion means for performing color conversion of a received color image obtained through a network using the color reproduction characteristic and the viewing illuminant condition to obtain a corrected color image, and for outputting the corrected color image to said color image display means.

2. The color reproduction terminal apparatus according to claim 1, wherein said color conversion means performs color conversion to the color image using (i) at least one of a color conversion profile and a color conversion program which are downloaded through the network, (ii) the color reproduction characteristic, and (iii) the viewing illuminant condition.

3. The color reproduction terminal apparatus according to claim 1, wherein:

   said characteristic capturing means includes the color camera and a sensor,
   the color camera includes at least one of a display capturing camera and a person capturing camera, and
   the sensor includes an illuminant sensor.

4. The color reproduction terminal apparatus according to claim 1, wherein said color image display means includes one of a liquid crystal display, a CRT display, and a projector.

5. The color reproduction terminal apparatus according to claim 1, wherein:

   said characteristic capturing means includes the color camera; and
   the color camera includes one of a digital still camera, a digital video camera, and a multi-spectral camera.

6. The color reproduction terminal apparatus according to claim 1, wherein said characteristic capturing means includes a camera-head-position-moving-mechanism for moving the color camera so as to capture an operator and a display screen of said color image display means.

7. The color reproduction terminal apparatus according to claim 1, wherein:

said characteristic capturing means includes the color camera and the sensor, and

the color camera and the sensor always or intermittently photograph at least a portion of a display screen of said color image display means.

8. The color reproduction terminal apparatus according to claim 1, wherein said color conversion means includes:

means for estimating a spectral distribution of an object from a spectral characteristic of an image capturing camera and illuminant spectral information; and

means for estimating tristimulus values of the object based on the viewing illuminant condition.

9. The color reproduction terminal apparatus according to claim 1, wherein said color conversion means further includes means for one of generating and updating a display profile of said color image display means from color patch data, a plurality of camera profiles, a profile generating program, and a color conversion program.

10. The color reproduction terminal apparatus according to claim 2, wherein said color conversion means further includes means for downloading at least one of color patch data, a plurality of camera profiles, a profile generating program, and the color conversion program through the network, and said color conversion means further comprises means for one of generating and updating a display profile of said color image display means.

11. The color reproduction terminal apparatus according to claim 1, wherein the color image is a moving image.

12. A color reproduction server apparatus comprising:

means for storing a color conversion profile and a color conversion program; and

means for supplying the color conversion profile and the color conversion program through a network to a color reproduction terminal apparatus in response to the request from the color reproduction terminal apparatus, whereby the color reproduction terminal apparatus is enabled to perform color conversion using the color conversion profile and the color conversion program.

13. A network color reproduction system comprising:

(a) a color reproduction terminal apparatus comprising:

(a-1) color image display means for displaying a color image;

(a-2) characteristic capturing means for capturing a color reproduction characteristic of said color image display means and a viewing illuminant condition by employing at least one of a color camera and a sensor; and

(a-3) color conversion means for performing color conversion to a received color image obtained through a network using the color reproduction characteristic and the viewing illuminant condition to obtain a corrected color image, and for outputting the color image to said color image display means; and

(b) a color reproduction server apparatus comprising:

(b-1) means for storing a color conversion profile and a color conversion program; and

(b-2) means for supplying the color conversion profile and the color conversion program through the network to said color reproduction terminal apparatus in response to a request from said color reproduction terminal apparatus.

14. The network color reproduction system according to claim 13, wherein:

(c) said color reproduction server apparatus further includes:

(c-1) means for storing at least one of a color patch data, a plurality of camera profiles, an sRGB profile, a color conversion program, and a color conversion profile generating program; and

(c-2) means for supplying at least one of the color patch data, the plurality of the camera profiles, the sRGB profile, the color conversion program, and the color conversion profile generating program through the network to said color reproduction terminal apparatus in response to a request from said color reproduction terminal apparatus; and

(d) said color reproduction terminal apparatus further includes

(d-1) means for downloading at least one of the color patch data, the plurality of the camera profiles, the sRGB profile, the color conversion program, and the color conversion profile generating program through the network.

**15.** The network color reproduction system according to claim 13 further including

(e) an image server apparatus comprising:

(e-1) means for storing image data; and
(e-2) means for supplying the image data through the network to said color reproduction terminal apparatus in response to a request from said color reproduction terminal apparatus.

**16.** The network color reproduction system according to claim 15, wherein said image server apparatus further includes means for storing at least one of a multi-spectral color image comprising a plurality of bands, spectral distribution information of image capturing illuminant, filter spectral characteristic information of a color camera used for capturing a image, and base vector information of spectral distribution of the color image.

**17.** The network color reproduction system according to claim 13, wherein said color reproduction terminal apparatus further includes estimating means for estimating original spectral distribution from the received color image obtained through the network.

**18.** The network color reproduction system according to claim 17, wherein said color reproduction terminal apparatus further includes means for downloading a program used in said estimating means from said color reproduction server apparatus through the network

**19.** The network color reproduction system according to claim 13, wherein the color image is a moving image.

**20.** A color reproduction terminal apparatus comprising:

means for inputting a multi-spectral color image comprising P dimensions;
means for determining a target spectral distribution to be reproduced;
color conversion means for converting the target spectral distribution in a P-dimensional color space to a spectral distribution in a Q-dimensional color space; and
means for outputting a color image based on the input color image in accordance with the spectral distribution in the Q-dimensional color space.

**21.** A color reproduction terminal apparatus comprising:

means for inputting a multi-spectral color image comprising P dimensions; and
color conversion means for converting the input color image to an R-dimensional vector using R base vectors for approximating spectral distribution, where P is equal to or greater than R, and converting the R-dimensional vector to Q primary colors.

**22.** A color reproduction terminal apparatus comprising:

means for inputting a multi-spectral color image comprising P dimensions;
means for determining a plurality of attributes of a color appearance model of a reproduction target with an illuminant condition and a viewing illuminant condition;
means for converting the attribute values to Q primary colors; and
means for outputting a color image, based on the input color image, using the Q primary colors.

**23.** The color reproduction terminal apparatus according to claim 20, 21, or 22, wherein the color image is a moving image.

**24.** A color reproduction method comprising the steps of:

(a) downloading at least one of a color conversion profile and a color conversion program through a network;

(b) capturing a color reproduction characteristic of a color image display and a viewing illuminant condition by employing at least one of a color camera and a sensor;

(c) converting color of a color image obtained through the network using (i) at least one of the color conversion profile and the color conversion program, (ii) the color reproduction characteristic, and (iii) the viewing illuminant condition; and

(d) outputting a color image converted in said step (c) of converting to color image display.

**25.** A color reproduction method comprising the steps of:

storing a color conversion profile and a color conversion program; and

supplying the color conversion profile and the color conversion program to a color reproduction terminal apparatus through a network in response to a request from the color reproduction terminal apparatus, to enable the color reproduction terminal apparatus to perform color conversion using the color conversion profile and the color conversion program.

**26.** A computer readable recording medium in which a program is recorded for making a computer execute a color conversion method using at least one of a color conversion profile and a color conversion program, the color conversion method comprising the steps of:

(a) downloading the color reproduction profile and the color reproduction program through a network

(b) capturing a color reproduction characteristic of the color image display means and a viewing illuminant condition by employing at least one of a color camera and a sensor;

(c) converting color of the color image obtained through the network using (i) at least one of the color conversion profile and the color conversion program, (ii) the color reproduction characteristic, and (iii) the viewing illuminant condition; and

(d) outputting the color image converted in said step (c) to the color image displaying means.

**27.** A computer readable recording medium in which a program is recorded for making a computer execute a color reproduction method, the color reproduction method comprising the steps of:

storing a color conversion profile and a color conversion program; and

supplying the conversion profile and the conversion program to a color reproduction terminal apparatus through a network in response to a request from the color reproduction terminal,

whereby the color reproduction terminal is enabled to perform color conversion using the conversion profile and the conversion program.

**28.** A program for making a computer execute a color conversion method using at least one of a color conversion profile and a color conversion program, the color conversion profile and the color conversion program for being downloaded through a network, the color conversion method comprising the steps of:

(a) capturing a color reproduction characteristic of the color image display means and a viewing illuminant condition by employing at least one of a color camera and a sensor;

(b) converting color of the color image obtained through the network using (i) at least one of the color conversion profile and the color conversion program, (ii) the color reproduction characteristic, and (iii) the viewing illuminant condition; and

(c) outputting the color image converted in said step (b) to the color image displaying means.

**29.** A program for making a computer execute a color reproduction method of a color reproduction server, the color reproduction method comprising the steps of:

storing a color conversion profile and a color conversion program; and

supplying the conversion profile and the conversion program to a color reproduction terminal apparatus through a network in response to a request from the color reproduction terminal apparatus,

whereby the color reproduction terminal apparatus is enabled to perform color conversion using the conversion profile and the conversion program.

# Fig. 1

# Fig. 2

# Fig. 3

## Fig. 4

# Fig. 5

# Fig. 6

# Fig. 7

Color Reproduction Server
706

Color Reproduction
Terminal Apparatus
on User Terminal Side
705

202

203

201

| Color Patch Data | 701 |
| Camera Profile Database | 702 |
| Profile Generating Program | 703 |
| Color Conversion Part Program | 704 |

707
Network

# Fig. 8

**User Terminal**

**Color Reproduction Server**

802 — Obtain Color Patch Data

← Color Chip Data ← Send out Color Patch Data — 801

803 — Display Color Patch

804 — Generate Color Patch Picked-up Data with Color Camera

805 — Send out Color Patch Picked-up Data

RGB Data → Obtain Color Patch Picked-up Data — 806

807 — Send Out Camera Information

→ Select Camera Profile Based on Camera Information — 808

810 — Obtain Camera Profile

← Camera Profile ← Send Out Camera Profile — 809

Convert Color Patch Data to That in XYZ form with Camera Profile — 811

813 — Obtain Display Profile

← Display Profile ← Calculate and Send Out Display Profile — 812

# Fig. 9

Illuminant Light Sensor 102

Display Capturing Camera 902

Person Image Capturing Camera 901

Camera/Sensor Interface 103

Network 112

CPU 106

Network Interface 107

Memory 108

Hard Disk 109

Display Interface 104

Color Display / Projector 105

Input 110

Output 111

EP 1 079 605 A2

# Fig. 10

28

# Fig. 11

Color Reproduction
Server
706

Color Reproduction
Terminal Apparatus
on User Terminal Side
705

Network
707

206

Color
Conversion
Part
Program — 704

sRGB
Profile — 1103

Viewing
Illuminant
Information B
1105

Image
Data — 1102

Illuminant
Information
A — 1104

1101
Image Server
for Electronic Shopping

## Fig. 12

| User Terminal | Color Reproduction Server | Image Server |

1202 — Obtain Image Data ◄- - - - - - - - - Send Out Image Data

1204 — Obtain Color Conversion Part ◄- - Send Out Color Conversion Part ~ 1203

1201

1206 — Obtain sRGB Profile ◄- - Send Out sRGB Profile ~ 1205

1207 — Convert Color of Image Data from sRGB to XYZ with sRGB Profile

1209 — Obtain Illuminant Information A ◄- - - - Send Out Image-Illuminant Information A

1210 — Obtain Information from Illuminant Light Sensor B on Terminal

1208

1211 — Correction of Illumination, Chromatic Adaptation, and Contrast

1212 — Convert Color of Image from XYZ to RGB with Display Profile

1213 — Display Image Data

30

# Fig. 13

Correction of Illuminant, Chromatic Adaptation, and Contrast

1301 (XA   YA   ZA)

1302 (L   M   S)

1303 Von-Kries Adaptation Conversion

Illuminant Information A

Viewing Illuminant Information B

1304 (L'   M'   S')

1305 (XB   YB   ZB)

1306 Contrast Correction

1307 (XB'   YB'   ZB')

# Fig. 14

Correction of Illuminant, Chromatic Adaptation, and Contrast

# Fig. 15

Color Reproduction
Server          706

Network 707

Color Reproduction
Terminal Apparatus
on User Terminal Side
1506

1501

Object Spectral Distribution
Estimation Program

1102          1504
Image
Data          Illuminant
Information

1505
Camera Filter
Characteristic

1503  Object Spectral Distribution
Base Information

1101  Image Server for
Electronic Shopping

# Fig. 16

| User terminal | Color Reproduction Server | Image Server |
|---|---|---|

1602 — **Obtain Image Data** ← – – – – – – – – **Send Out Image Data** — 1601

**Send Out Camera Filter Characteristic and Illuminant Information** — 1603

**Send Out Spectral Distribution Base Information** — 1604

**Send Out Object Spectral Distribution Estimation Program** — 1605

1606 — **Estimate Object Spectral Distribution with Estimating Coefficients "a" for Object Spectral Distribution Bases**

1609 — **Multi-Primary Color Conversion**

1610 — **Display Image Data on Multi-Primary Color Display**

# Fig. 17

Viewing Illuminant Condition 1703

Process System 1

P-Band Spectral Distribution Data 1700

Reproduction Target Spectral Distribution 1701

Convert P-Band to Q-Primary Color 1702

Convert R-Band to Q-Primary Color 1707

Reproduction Target (X Y Z) 1704

Convert XYZ 3-dimension to Q-Primary Color 1705

1704    Process System 2

1609

Illuminant Condition Viewing Illuminant Condition 1706

Primary Color 1

Primary Color 2

Primary Color 3

Primary Color Q

# Fig. 18

Display A

203
706
1803
Network
707

Color Reproduction
Server
706

1801 Color Reproduction
Terminal Apparatus A
on User A side

704
Color Conversion
Part Program

Display B

203
706
1804

1802 Color Reproduction
Terminal Apparatus B
on User B side

## Fig. 19

**Terminal A**

1900 — Obtain Illuminant Sensor Information on Terminal A

1901 — Capture Image of User A

1902 — Convert Captured-Image Data A to XYZ

1903 — Convert XYZ to sRGB

1904 — Send Out Captured-Image Data A and Viewing Illuminant Information A

1915 — Obtain Captured- Image Data B and Viewing Illuminant Information B

1916 — Convert Captured-Image Data B from sRGB to XYZ

1917 — Perform Illuminant Correction to XYZ

1918 — Convert XYZ of Captured-Image Data B to RGB with Display Profile A

1919 — Display Captured-Image Data B on Display A

**Terminal B**

Captured-Image Data A and Veiwing Illuminant Information A — 1905

Convert Captured-Image Data A from sRGB to XYZ — 1906

Perform Illuminant, Color Adaptation, and Contrast Correction to XYZ — 1907

Convert XYZ of Captured-Image Data A to RGB with Display Profile B — 1908

Display Captured-Image Data A on Display B — 1909

Obtain Illuminant Sensor Information on Terminal B — 1910

Capture image of User B — 1911

Convert Captured-Image Data B to XYZ — 1912

Convert Captured-Image Data B from XYZ to sRGB — 1913

Send Out Captured-Image Data B and Viewing Illuminant Information B — 1914

# Fig. 20